# EUROPEAN PATENT SPECIFICATION

(11) **EP 0 328 066 B1**
(45) Date of publication and mention of the grant of the patent: **07.12.1994**
(21) Application number: 89102145.3
(22) Date of filing: 08.02.1989
(51) Int. Cl.: G05B 23/02

(54) **Method of detecting noise disappearance and detecting device therefor**
Ermittlungsverfahren für das Geräuschverschwinden und Ermittlungsvorrichtung dafür
Procédé de détection de la disparition de bruit et dispositif de détection

(30) Priority: 09.02.1988 JP 26505/88; 07.04.1988 JP 46224/88 U
(43) Date of publication of application: 16.08.1989
(73) Proprietor: MITSUBISHI JUKOGYO KABUSHIKI KAISHA, Tokyo 100 (JP); IDEMITSU KOSAN COMPANY LIMITED, Tokyo 100 (JP)
(72) Inventor: Toyoda, Ichiro c/o Hiroshima Technical Institute, Nishi-ku Hiroshima-shi Hiroshima-ken (JP); Niinomi, Toshihiko c/o Hiroshima Technical Inst., Nishi-ku Hiroshima-shi Hiroshima-ken (JP); Kaseda, Shigeru, 11, Minamihama-cho Chita-shi Aichi-ken (JP); Takahasi, Koichi, 11, Minamihama-cho Chita-shi Aichi-ken (JP)
(74) Representative: Grünecker, Kinkeldey, Stockmair & Schwanhäusser Anwaltssozietät

(56) References cited:
- EP-A- 0 182 742
- GB-A- 2 130 755
- GB-A- 2 169 720
- PATENT ABSTRACTS OF JAPAN vol. 9, no. 253 (P-395)(1976) 11 October 1985,& JP-A-60 103401(TOSHIBA K.K) 07 June 1985.

## Description

### BACKGROUND OF THE INVENTION

### 1. Field of the Invention

The present invention relates to a method of detecting a noise reduction in a signal and a detecting device therefore, wherein signals output from a detector are received successively and the decrease of a noise component concerned with process vibrations and included in the output signal and caused by a fault of a plant (sticking of a valve, blocking of a piping, etc.) or a trouble in an instrument itself is detected to thereby detect the fault or the trouble, respectively.

### 2. Description of the Related Art

From EP-A-O 182 742 a circuit for generating a reception criterion is known in which reception of a signal and failure thereof are detected by evaluating the noise level at the output of the receiver. Sample periods are formed during which the loading of a capacitor is changed from a fixed value to a value dependent on the actual noise level. The time period between the start of the sample period until a predetermined load condition is attained is compared with the reference time period, and the reception criterion is generated when the time period dependent on the actual noise is shorter than the reference time period. In a specific embodiment, the reference time period is generated in a manner similar to the first mentioned time period. Thus, presence and absence of a signal may be readily detected.

It has heretofore been difficult to detect a fault of a plant or of instruments at an early stage because, in most cases, operators did not sense the fault of the instruments, etc. until serious faults occurred in a process. Particularly after adoption of the DCS instrumentation, it has become difficult to grasp time-variable detected values only by digital values, and further to detect the fault. In addition, it is difficult to provide a device exclusively used for sensing the fault from the viewpoint of economics.

Therefore, there has been proposed a device for detecting almost no change in output signal from a detector provided in a plant, and giving a predetermined alarm as occurrence of a fault in the plant or the detector.

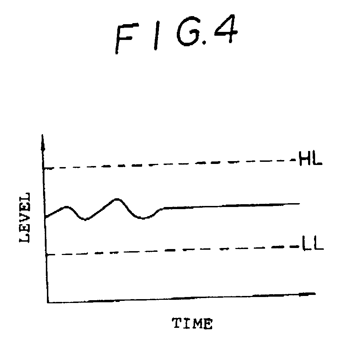

As shown in Fig. 4 for example, in this device, even if the output signals fall into a preset abnormality determining value range having an upper and a lower limit (between HL and LL), the fact that the output value continues to be hardly changed is determined to be an abnormality by a determining system in which a difference of the output value from a certain reference value becomes continuously small.

However, when the modes of abnormality occurrence in the plant due to faults of the detectors, blocking of the piping and the like are taken into consideration, it is not sufficient to merely monitor the state of no change in the output signal from the detector as in the conventional techniques. More specifically, with actual abnormalities, there are many cases where even if the output signal itself of the detector fluctuates in tendency of increasing or decreasing, noise components which should be intrisically included in the fluctuation of signal decrease due to the abnormality. There is then unavoidably the problem that the abnormality described above cannot be detected by the conventional technique. This is because the reference value during the occurrence of the abnormality is used in a fixed manner, that is, a detected value is merely compared with the reference value which is not renewed.

Fluctuations of the process are of two different types. One type of fluctuations of the process including low frequency waves occurs in a case where the operating conditions of the process are changed or disturbances take place in the process. In this case, the value of the process changes relatively moderately. On the other hand, even when the stable operation is performed with no change being given to the process, if e.g. a liquid surface is shaken or pulsations in the flow rate occur due to the conveyance by a pump, then the other type of fluctuations of the process including high frequency waves such as noises occurs.

When the latter fluctuations are observed, it may be said that the output value is normal. Accordingly, in order to perform the noise reduction or disappearance detecting with high accuracy, it is desirable that the former low frequency fluctuations and the latter high frequency fluctuations can be monitored separately from each other.

To state further concretely, for example, assumption is made that a differential pressure type level meter as being a detector provided in a plant detects a level of a liquid surface in a vessel. The above-described level meter and vessel are connected to each other through a conduit.

In general, it is easily considered that the output signal from the level meter falls into the state of no change when the interior of the conduit is blocked. In practice, the pressure in the conduit is varied with time due to the condensation and contraction of the vapor phase in the conduit, and, in many cases, the output signal from the detector continues increasing or decreasing. And yet, even in these cases, the high frequency vibration components included in the output signal decrease, however, there has been presented the problem that the noise reduction or disappearance cannot be detected, in a state where the output signal shows the increase or decrease, by the conventional technique.

### SUMMARY OF THE INVENTION

Therefore, the present invention has been developed to solve the above-described disadvantages of the prior art and has as its object the provision of a method of detecting noise reduction and a detecting device therefor wherein data subjected to sampling successively are processed by a relatively easy technique, and, when a noise reduction phenomenon occurs in detected output signals due to some abnormality or other, the phenomenon is quickly detected and an operator is notified of it.

To achieve the above-described object, a method of detecting a noise reduction according to a first aspect of the present invention is provided including the steps set forth in claim 1.

A detecting device for detecting a noise reduction according to a second aspect of the invention, which conducts the method according to the first aspect of the invention, comprises the features of claim 3.

Preferred embodiments of the invention are subject matter of the respective dependent claims.

With the above-described arrangements according to the present invention, when a noise reduction or even, disappearance phenomenon due to an abnormality in the plant or a fault in the detector itself appears, the absolute value of a difference between the newest value and the past value of a predetermined period of time before of the detected values is processed and output, and, when the time during which the absolute value of the difference is continuously smaller than the preset value becomes larger than the preset time which has been determined to be abnormal, this situation is regarded as occurrence of a noise reduction phenomenon and the operator can be notified of it.

Furthermore, simultaneously with the above-described action, the threshold value renewing means receives the outputs from the counter means and the threshold value renewing request signal given as necessary, and the maximum value of the counter outputs during a predetermined period of time upon receiving this threshold value renewing request signal is output into the limiter means as a new threshold value of the limiter means.

In detecting the noise reduction or even disappearance, in order to detect it as quickly as possible, it is necessary to lessen the threshold value of the aforesaid count number. In this case, on the contrary, this may result in a factor causing occurrence of false alarm information. On the other hand, it is very difficult to previously set a threshold value for determining an abnormality. According to a preferred embodiment of the present invention, in setting the threshold value, a normal range can be empirically determined by taking in data in association with the characteristics of the respective detectors and changes in the operating conditions, etc.

Further, since the magnitude of fluctuation of the detection signal and the threshold value of the count number are in interrelations in which both parameters have the respective degrees of freedom, if one of the parameters is set, the other can be determined accordingly. This requires to examine what kind of result follows in the case where one of the parameters is determined, and thereafter, the other is changed. According to the present invention, the above-described process can be easily performed and it becomes possible to determine the suitable values of the two parameters. In other words, unsuitable setting of the parameters which contributes to false alarm information and time delay in the alarm giving can be avoided.

Incidentally, the term "noise reduction" in this specification refers to a case where the intrinsic high frequency vibration component included in the fluctuation, etc, of the process is decreased to a considerable extent.

### BRIEF DESCRIPTION OF THE DRAWINGS

Fig. 1 is a block diagram of the noise reduction detecting device showing one embodiment to which the method according to the first aspect of the present invention is applied;
Figs. 2(A) through 2(D) are charts showing the output signals in various sections of the device shown in Fig. 1;
Fig. 3 is a block diagram of the noise reduction detecting device showing one embodiment to which another embodiment of the method according to the present invention is applied; and
Fig. 4 is a chart for explaining the conventional example.

### DETAILED DESCRIPTION OF THE PREFERRED EMBODIMENTS

Embodiments of the present invention will hereunder be described with reference to the accompanying drawings.

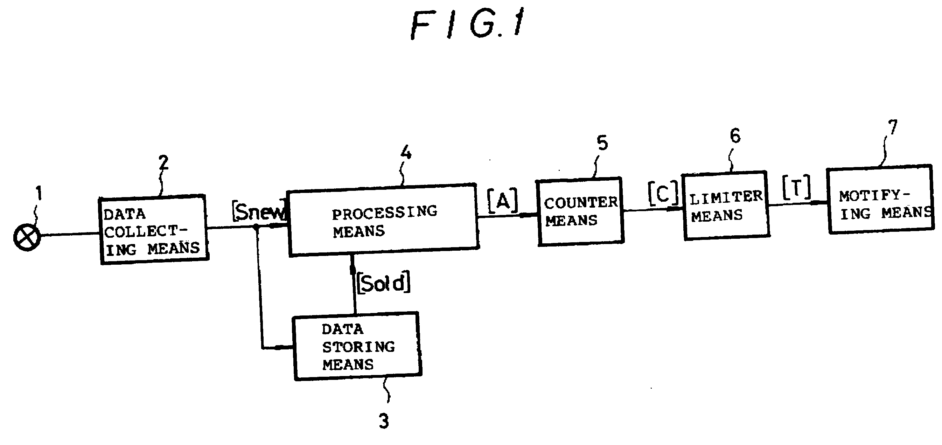

In Fig. 1 showing one embodiment to which the method according to the invention is applied. The output signal from a detector 1 is successively collected by data collecting means 2 whose output signals are successively input into data storing means 3 and stored therein as being past value data which is to be output to processing means 4. The processing means 4 receives the output signal from the data collecting means 2 as the newest value (Snew) of the detector 1, receives an output signal from the data storing means 3 as a preceding time value (Sold) of the detector 1, the preceding time value being used as the past value obtained a predetermined period of time before, which is stored in and successively renewed by the data storing means 3, successively performs the calculation of the absolute value of a difference as shown in the following equation (1) at each data collection time, and outputs the result (A) into counter means 5.$\text{A = |Snew - Sold|}$

The counter means 5 receives an output signal from the processing means 4 and compares the output signal with a preset value (Aset) (a set value, which is smaller than the vibrations of a normal signal). When the output signal from the processing means 4 is not larger than the preset value, the count number (C) of the counter means 5 is incremented. When the output signal of the processing means 4 is larger than the preset value, the count number (C) of the counter 5 is cleared. Namely,$\text{When A < Aset, C = Cold + 1}$$\text{When A ≧ Aset, C = 0}$

Limiter means 6 receives an output signal (C) from the counter means 5 and compares the output signal with a preset value (Cset) (a set period of time, by which noise disappearance can be decided). When the output signal (C) of the counter means 5 exceeds the preset value (Cset), a trigger signal (T) is turned "ON". When the output signal (C) of the counter means 5 is smaller than the preset value (Cset), the trigger signal (T) if turned "OFF". When the trigger output signal (T) of the limitter means 6 is "ON", notifying means 7 notifies the operator of the result, i.e. an occurance of noise reduction (or disappearance) phenomenon by means of a CRT, a printer, an annunciator or the like.

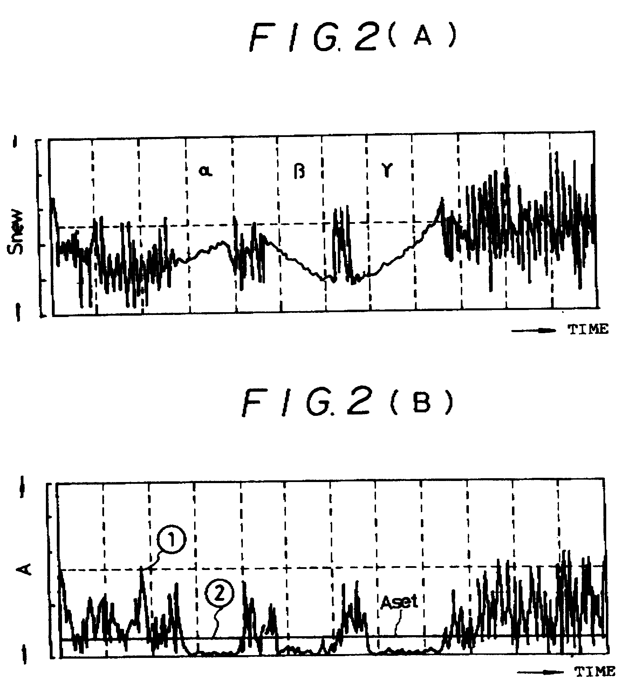

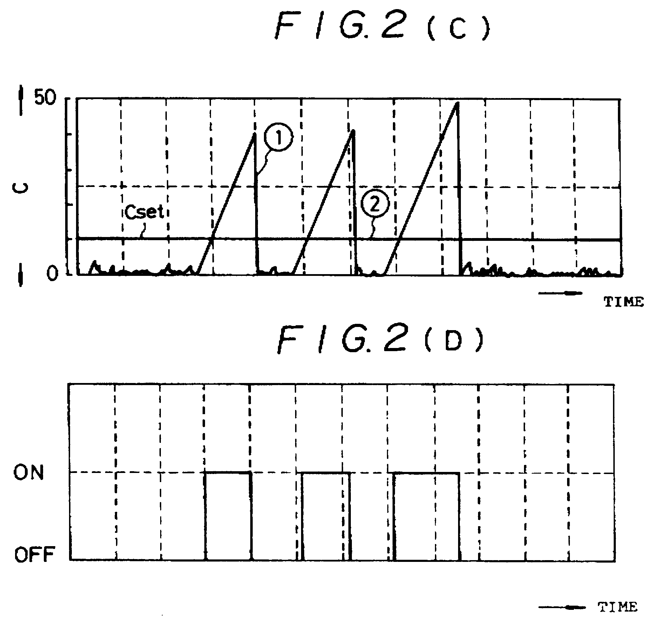

Figs. 2(A) through 2(D) show examples of the output signals having various arrangements as shown in Fig. 1.

Fig. 2(A) shows an example of the output signal (Snew) from the data collecting means 2, corresponding to the fluctuation with time of the output signal of the detector 1. ① of Fig. 2(B) shows an example of the output signal (A) from the processing means 4, which is obtained by the absolute value of the difference between the newest value from the data collecting means 2 and the proceding time value from the data storing means 3 which is successively renewed, to the output signal of the detector 1 shown in Fig. 2(A), ② of Fig. 2(B) an example of a preset value (Aset) of the counter means 5. ① of Fig. 2(C) shows an example of the output signal (C) of the counter means 5, when the input signal of the counter means 5 which is output signal ① of Fig. 2(B) becomes smaller than the preset value, ② of Fig. 2(C) an example of the threshold value (Cset) of the limiter means 6, and Fig. 2(D) an example of the trigger output signal (T) of the limiter menns 6, when the counter number as shown in Fig. 2(C) exceeds the threshold value.

Now, as shown in Fig. 2(A), description will hereunder be given of a case where the noise reduction phenomena occur at three positions α, β and γ in the drawing.

During the normal periods of time other than α, β and γ, the absolute value of a difference (A) between the present time value and the preceding time value, which are the output signals from the processing means 4, is larger than the preset value (Aset), whereby the output (C) from the counter means 5 is small and does not exceed the preset value (Cset). However, during the periods of α, β and γ in Fig. 2(A) where the noise reduction phenomena occur, the absolute value of the difference (A) between the newest time value and the preceding time value, which are the output signals from the processing means 4, becomes sufficiently smaller than the preset value (Aset), whereby the output (C) from the counter means 5 increases and exceeds the threshold value (Cset). Then, the trigger signal (T) is output into the notifying means 7 by the limiter means 6, to thereby notify the operator of the occurance of noise disappearance phenomena. Incidentally, when the output signals from the detector 1 return to the normal conditions, the trigger signal (T) is turned off and the alarm is released.

According to the embodiment as described above, such an arrangement is adopted that the absolute value of the difference between the preceding time value and the newest time value of the detected values is calculated by the processing means 4 and it is decided whether the absolute value of the difference is larger than the preset value or not, so that, even if only noise component of the detected value signal having a tendency of increasing or decreasing in the regions α, β and γ shown in Fig. 2(A) is descreased, the detection of it can be made in high accuracy.

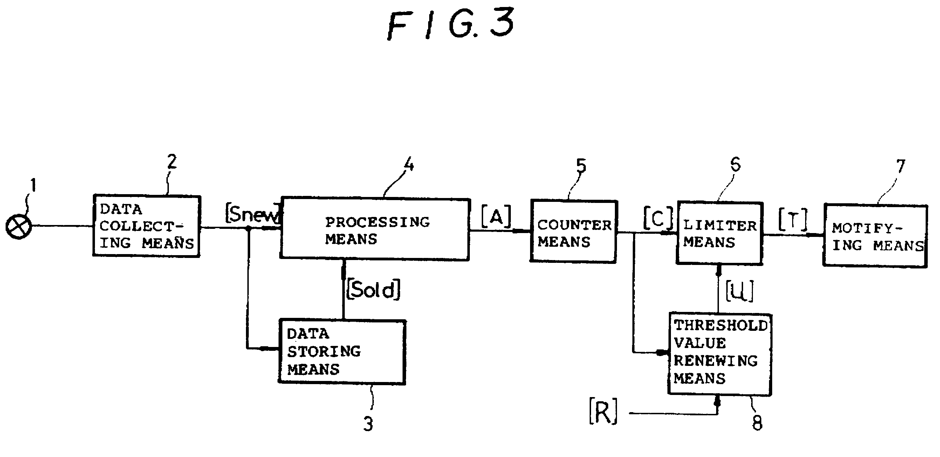

Another embodiment to which a further embodiment of the method according to the invention is applied will be described with reference to Fig. 3. In this description, same reference numerals are used to designate to same parts corresponding to ones as in the embodiment described above, so that the description will be omitted or simplified.

As shown in Fig. 3, this embodiment features in that there is additionally provided threshold value renewing means 8 which receives the output from the counter means 5 and a threshold value renewal request signal (R), and outputs a threshold renewed value (u) to the limiter means 6.

With the above-described arrangement,
(1) the threshold value renewal request signal (R) given as necessary in a case where the operating condition is changed, i.e. a calculation start signal for renewing a threshold value and the output from the counter means 5 are input into the threshold value renewing means 8. Upon receiving the threshold value renewal request signal (R), the threshold value renewing means 8, after collecting the outputs from the counter means 5 during a predetermined period of time, searches the maximum value, i.e. new threshold renewed value (u) and outputs the same into the limiter means 6.
(2) On the other hand, the limiter means 6 acts similarly to the first embodiment until the time at which the threshold value renewal indication signal (R) is input. Thereafter, the limiter means 6 receives the threshold renewed value (u) as a new threshold value, decides an occurance of noise reduction phenomena when the output value from the counter means 5 exceeds the renewed threshold value (u), and outputs the trigger signal (T) to the notifying means 7.

According to the this embodiment as described above, the threshold value of the limiter means 6 is determined based on the threshold value renewal request signal (R) to the threshold value renewing means 8 such that the integrated value of the counter means 5 is statistically observed over a relatively long period of time and the threshold value is determined on the basis of the maximum value, so that such a meritorious effect can be added that a noise reduction detecting device having higher reliability is obtained.

Incidentally, in the latter example of working the method according to the present invention and the detecting device therefor, the arrangement wherein the absolute value of the difference between the newest value and the past value to be renewed successively, of the detected values, is calculated and compared with the preset value. However, in place of the above, such an arrangement may be adopted that, as for the past value, which is output from the data storing means 3 to the processing means 4, when the absolute value between the newest value and the past value in the processing means 4 exceeds the preset value, a reset signal is output from the processing means 4 to the data storing means 3, a detected value from the data collecting means 2, which is given to the data storing means 3 when this reset signal is received, is stored and renewed as a past value, and output to the processing means 4.

Thus, in setting the threshold value, the normal range can be empirically determined by taking in data in association with the characteristics of the respective detectors and the changes in the operating conditions, etc. Further, on the basis of the interrelations between the magnitudes of fluctuations of the detection signals and the threshold values of the count numbers, it becomes possible to examine what kind of result follows when one of the parameters is determined, and thereafter, the other is changed. Since this method of detecting a noise reduction and the detecting device therefor adopt a simple logic, the logic can be included in a computer assembled in the plant, monitoring of the noise reduction of the detection values in a large quantity can be performed without requiring so much load of the computer, and a period of time for observing detection values necessary for determining the noise disappearance can be automatically determined.

## Claims

1. A method of detecting a substantial reduction of a noise component in signals output from a detector, comprising the steps of:
successively collecting the signals output by the detector in a data collector,
storing said collected signals in a memory:
detecting the absolute value of the difference between the signal currently output from said data collector and one of said stored signals which has been output a predetermined period of time before,
comparing said absolute value with a preset value and incrementing a count number when said absolute difference is smaller than said value, but clearing said count number when said absolute value is greater than said preset value, and
issuing an alarm when said count number is greater than a preset threshold value to indicate the substantial reduction of the noise component in the signal output by the detector.

2. A method as set forth in claim 1, wherein said threshold value is changed to be a maximum value of said count number occurring during a predetermined period of time following receipt of a threshold value renewing request signal.

3. A detecting device for detecting a substantial reduction of a noise component in signals output from a detector, comprising:
data collecting means (2) for successfully collecting said signals from said detector (1);
data storing means (3) for storing output signals issued from said data collecting means (2);
processing means (4) for processing and outputting the absolute value of a difference between the output signal (S_{new}) currently issuing from said data collection means (2) and one (S_{old}) of the output signals stored in said data storing means (3), which has been output a predetermined period of time before;
counter means (5) for incrementing a count number therein when said absolute value is smaller than a preset value, but for clearing said count number when said absolute value is larger than said preset value;
limiter means (6) responsive to said count number for outputting a trigger signal when said count number is greater than a preset threshold value, and
notifying means (7) for issuing an alarm in response to said trigger signal.

4. The detecting device as set forth in claim 3, further comprising:
threshold value renewing means (8) responsive to a threshold value renewing request signal for changing said threshold value to a maximum value of said count number occurring during a predetermined period of time following receipt of said threshold value renewing request signal.

## Patentansprüche

1. Verfahren zum Ermitteln einer wesentlichen Verminderung einer Rauschkomponente in Signalen, die von einem Detektor abgegeben werden, enthaltend die Schritte:
aufeinanderfolgendes Sammeln der Signale, die von dem Detektor abgegeben werden, in einem Datensammler,
Speichern der gesammelten Signale in einem Speicher;
Ermitteln des Absolutwertes der Differenz zwischen dem Signal, das gegenwärtig von dem Datensammler ausgegeben wird, und einem der gespeicherten Signale, das in einer vorbestimmten Zeitdauer davor ausgegeben worden ist,
Vergleichen des genannten Absolutwertes mit einem Voreinstellwert und Erhöhen einer Zählzahl, wenn die absolute Differenz kleiner als der genannte Wert ist, jedoch Löschen der Zählzahl, wenn der Absolutwert größer als der Voreinstellwert ist, und
Abgeben eines Alarms, wenn die Zählzahl größer als ein vorgegebener Grenzwert ist, um die wesentliche Verminderung der Rauschkomponente in dem von dem Detektor abgegebenen Signal anzuzeigen.

2. Verfahren nach Anspruch 1, bei dem der Grenzwert verändert wird, um ein Maximalwert des Zählwertes zu werden, der während einer vorbestimmten Zeitdauer im Anschluß an den Empfang eines Grenzwerterneuerungsanforderungssignals auftritt.

3. Detektorvorrichtung zum Ermitteln einer wesentlichen Verminderung einer Rauschkomponente in von einem Detektor ausgegebenen Signalen, enthaltend:
eine Datensammeleinrichtung (2) zum aufeinanderfolgenden Sammeln der Signale von dem Detektor (1);
eine Datenspeichereinrichtung (3) zum Speichern der Ausgangssignale, die von der Datensammeleinrichtung (2) abgegeben werden;
eine Verarbeitungseinrichtung (4) zum Verarbeiten und Ausgeben des Absolutwertes einer Differenz zwischen dem Ausgangssignal (Snew), das gegenwärtig von der Datensammeleinrichtung (2) ausgegeben wird, und einem (Sold) der Ausgangssignale, die in der Datenspeichereinrichtung (3) gespeichert sind und das eine vorbestimmte Zeitdauer davor ausgegeben worden ist;
eine Zähleinrichtung (5) zum Erhöhen einer Zählzahl darin, wenn der Absolutwert kleiner als ein Voreinstellwert ist, aber zum Löschen der Zählzahl, wenn der Absolutwert größer als der Voreinstellwert ist;
eine Begrenzereinrichtung (6), die auf die Zählzahl anspricht, um ein Triggersignal abzugeben, wenn die Zählzahl größer als ein vorgegebener Grenzwert ist, und
eine Unterrichtungseinrichtung (7) zum Abgeben eines Alarms in Abhängigkeit von dem Triggersignal.

4. Detektoreinrichtung nach Anspruch 3, weiterhin enthaltend:
eine Grenzwerterneuerungseinrichtung (8), die auf ein Grenzwerterneuerungsanforderungssignal anspricht, um den Grenzwert auf einen Maximalwert der Zählzahl zu ändern, die während einer vorbestimmten Zeitdauer im Anschluß auf das Auftreten des Grenzwerterneuerungsanforderungssignals zu ändern.

## Revendications

1. Procédé pour détecter une réduction substantielle d'une composante de bruit dans des signaux émis par un détecteur, comprenant les étapes suivantes :
recueillir successivement les signaux émis par le détecteur dans un collecteur de données,
stocker les signaux recueillis dans une mémoire,
détecter la valeur absolue de la différence entre le signal couramment émis par le collecteur de données et l'un des signaux stockés, qui a été émis une période de temps prédéterminée auparavant,
comparer cette valeur absolue à une valeur préalablement fixée et incrémenter un nombre de comptes lorsque cette différence absolue est plus petite que ladite valeur préalablement fixée, mais effacer le nombre de comptes lorsque cette valeur absolue est supérieure à la valeur préalablement fixée, et
émettre une alarme lorsque le nombre de comptes est supérieur à une valeur de seuil préalablement fixée pour indiquer la réduction substantielle de la composante de bruit dans le signal émis par le détecteur.

2. Procédé selon la revendication 1, dans lequel la valeur de seuil est changée pour être une valeur maximale du nombre de comptes survenant pendant une période de temps prédéterminée après réception d'un signal de demande de renouvellement de la valeur de seuil.

3. Dispositif de détection pour détecter une réduction notable d'une composante de bruit dans des signaux émis par un détecteur, comprenant :
des moyens de collecte des données (2) pour recueillir successivement lesdits signaux du détecteur (1),
des moyens de stockage des données (3) pour stocker les signaux de sortie émis par les moyens de collecte de données (2),
des moyens de traitement (4) pour traiter et émettre la valeur absolue de la différence entre le signal de sortie (Sn) sortant couramment des moyens de collecte des données (2) et l'un (Sp) des signaux de sortie stockés dans les moyens de stockage des données (3), qui a été émis une période de temps prédéterminée auparavant,
des moyens de compteur (5) pour y incrémenter un nombre de comptes lorsque la valeur absolue est inférieure à une valeur préalablement fixée, mais pour effacer ce nombre de comptes lorsque cette valeur absolue est supérieure à la valeur préalablement fixée,
des moyens limiteurs (6) sensibles au nombre de comptes pour émettre un signal de déclenchement lorsque ce nombre de comptes est supérieur à une valeur de seuil préalablement fixée, et
des moyens de notification (7) pour émettre une alarme en réponse à ce signal de déclenchement.

4. Dispositif de détection selon la revendication 3, comprenant en outre des moyens de renouvellement des valeurs de seuil (8) sensibles à un signal de demande de renouvellement de la valeur de seuil pour changer la valeur de seuil pour une valeur maximale du nombre de comptes survenant pendant une période de temps prédéterminée après réception de ce signal de demande de renouvellement de la valeur de seuil.
